(19) Europäisches Patentamt
European Patent Office
Office européen des brevets

(11) **EP 3 093 073 B1**

(12) **EUROPEAN PATENT SPECIFICATION**

(45) Date of publication and mention
of the grant of the patent:
**23.12.2020 Bulletin 2020/52**

(51) Int Cl.:
***B03C 3/38*** *(2006.01)*      ***B03C 3/68*** *(2006.01)*
***B01D 53/32*** *(2006.01)*      ***H05H 1/24*** *(2006.01)*
***H01T 23/00*** *(2006.01)*

(21) Application number: **16169737.0**

(22) Date of filing: **13.05.2016**

(54) **IONIZATION APPARATUS PROVIDED WITH AN IONIZATION TUBE AND OPERATING METHOD THEREOF**

IONISIERUNGSVORRICHTUNG MIT EINER IONISIERUNGSRÖHRE UND BETRIEBSVERFAHREN DAFÜR

APPAREIL D'IONISATION MUNI D'UN TUBE D'IONISATION ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2015 IT TV20150065**

(43) Date of publication of application:
**16.11.2016 Bulletin 2016/46**

(73) Proprietor: **Hiref S.p.A.**
**35020 Tribano (IT)**

(72) Inventor: **MANTOVAN, Mauro**
**35020 TRIBANO (IT)**

(74) Representative: **Zamprogno, Bruno et al**
**STUDIO TORTA S.p.A.**
**Via Viotti, 9**
**10121 Torino (IT)**

(56) References cited:
**EP-A1- 0 661 100        EP-A1- 2 249 446**
**WO-A1-00/16906         WO-A1-2006/130997**
**DE-A1- 10 023 821       US-A- 4 779 182**

**Description**

This patent application relates to an ionization apparatus provided with an ionization tube to remove polluting/contaminating particulates present in a fluid and to the operating method thereof.

In particular, the invention relates to the electronic control of the voltage to be supplied to a so-called "cold plasma" ionization tube to ionize a fluid so as to remove/eliminate, due to an oxidation effect, biological, micro-organic polluting particles (bacteria, viruses, moulds, subproducts thereof, e.g. endotoxins), besides the chemical pollutants present in the fluid. The fluid undergoing the ionization process, according to the invention, could correspond, for example, to air and water (wastewater), to which the description below will explicitly refer without for this reason losing generality.

As it is known, some types of ionization apparatuses are provided with a generator generally referred to as ionization tube (or cylindrical capacitor), which is structured so as to generate an electric field that causes a corona discharge when it is supplied with a "high voltage" usually ranging from 1500 to 4000 volt, so as to ionize the air surrounding it. The ionized air is then properly "mixed" with the fluid, so as to remove possible polluting/contaminating agents/particles therefrom. A cylindrical capacitor or ionization tube used in the ionization apparatuses mentioned above is described, for example, in patent CH 66 637 2 and in patent US 8,747,754.

It is also known that ionization apparatuses are usually provided with a supplying device, which is configured so as to supply the high voltage to the ionization tube. The supplying device typically comprises a transformer, which has the primary circuit connected to the home network to receive a medium alternating voltage, usually at 220 V, 50 Hz, and a secondary circuit connected to the two terminals of the cylindrical armatures of the ionization tube to supply it with the high alternating voltage (for example 3000V) at the same network frequency (50 Hz). Such an ionization apparatus is described, for example, in patent application WO 2006/130997 A1.

Obviously, the transformer must be sized depending on the value of the voltage to be supplied to the ionization tube. Therefore, it is necessary to modify the size features of the ionization tubes and/or the technical features of the transformers based on the changes of the type of pollutant and/or of the fluid to be purified, considering everything that this involves in terms of difficulties in handling the production of the apparatus and relative manufacturing costs, in particular for the transformers. In other words, the ionization apparatuses described above are not very versatile, as they require different types of transformers depending on the type of ionization tube.

Furthermore, the supplying devices of the ionization tubes described above can only provide a high voltage characterized by a single frequency corresponding to the network frequency. However, there is the need to increase the frequency for the purpose of increasing the degree of ionization of the air, though keeping the supply voltage stable at a predetermined value.

Hence, the Applicant carried out a detailed research aimed at identifying a solution concerning an ionization apparatus, provided with an electronic control system to control the voltage supplied to the ionization tube, which is especially versatile, namely which, on the one hand, can easily be adapted to ionization tubes without having to replace the transformer and, on the other hand, allows the frequency of the high voltage to be changed, though keeping the voltage itself stable at a desired value.

Therefore, the object of the invention is to provide a solution that allows the aims described above to be reached.

This object is reached by the invention, as it relates to an ionization apparatus and to the operating method thereof, according to the features set forth in the appended claims.

The invention will now be described with reference to the accompanying drawings, which show a non-limiting embodiment thereof, wherein:

- Figure 1 shows a circuit diagram of the ionization apparatus according to the invention, and a schematic cross section of the ionization tube;
- Figure 2 is a first embodiment of the ionization apparatus shown in Figure 1;
- Figure 3 is a second embodiment of the ionization apparatus shown in Figure 1;
- Figures 4, 5, 6 e 7 are graphs showing examples of functions carried out by as many modules of the ionization apparatus shown in Figure 1.

The invention will now be described in detail with reference to the accompanying drawings, so as to allow a person skilled in the art to carry it out and to use it. Possible changes to the embodiments described will be immediately evident to skilled people and the generic principles described can be applied to other embodiments and applications without for this reason going beyond the scope of protection of the invention as it is defined in the appended claims. Therefore, the invention cannot be considered as limited to the embodiments described and shown herein, but is has to be associated with the widest scope of protection possible in accordance with the principles and the features described and claimed herein.

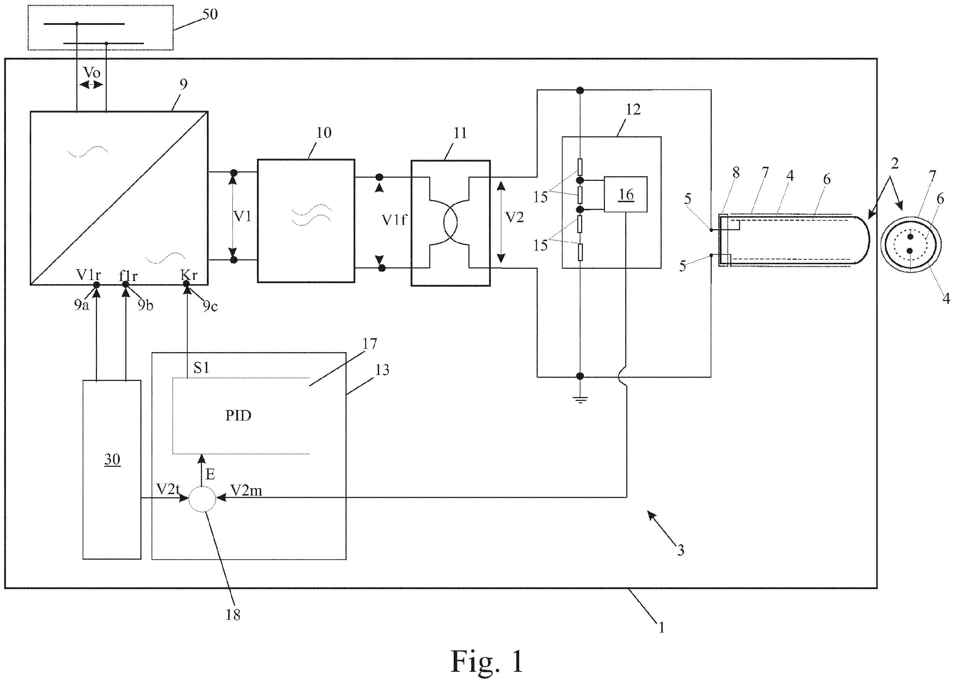

With reference to figure 1, number 1 indicates, as a whole, a ionization apparatus, which basically comprises a ionization tube 2 adapted to generate an electric field that causes a corona discharge when it is supplied with a predetermined "high" alternating supply voltage, and an electronic control system 3, which is electrically connected to the ionization tube 2 to supply the predetermined high alternating supply voltage thereto.

According to a preferred embodiment shown in Figure 1, the ionization tube 2 can basically comprise a tubular element 4, a cathode 6 and an anode 7.

Preferably, the tubular element 4 can be made of glass, is shaped so as to have a substantially cylindrical, oblong shape, extends along a longitudinal axis, and has first and a second longitudinal ends, opposite one another, wherein the first end is closed by a portion made of glass or of a similar insulating material, preferably rounded having an approximately U-shaped longitudinal section, whereas the second end is open and is steadily coupled to a closing plug 8 having a substantially cylindrical shape.

As far as the cathode 6 is concerned, it comprises a perforated, tubular liner with a substantially cylindrical shape, which is fitted inside the tubular element 4 and is sized so as to preferably rest against the inner surface of the tubular element 4. The perforated, tubular liner extends along the longitudinal axis, so as to substantially cover the entire length of the tubular element 4 and is made of a metal material, preferably aluminium or similar materials.

As far as the anode 7 is concerned, it comprises a cylindrical, tubular net, which is fitted on the outside of the tubular element 4 and is sized so as to preferably rest against the outer surface of the tubular element 4. The cylindrical, tubular net has an oblong shape and extends along the longitudinal axis substantially along the entire length of the tubular element 4, so as to face the perforated, tubular liner, and is made of a metal material, preferably stainless steel or similar materials.

In the example shown herein, the ionization tube 2 further comprises two external electric terminals 5, one of them being connected to the cathode 6, whereas the other one is connected to the anode 7.

The ionization tube 2 can be made according to the description of patent no. US 8,747, 754.

With reference to Figure 1, the electronic control system 3 comprises an inverter device 9 (electronic inverter); preferably - though not necessarily - a sine-wave filter 10; a transformer 11; a measuring device 12; and a controller circuit 13.

According to a preferred embodiment shown in Figure 1, the inverter device 9 has at least two input terminals, which are connected to the power supply network 50 so as to receive a network voltage Vo, namely a preferably sinusoidal alternating voltage, for example Vo=220 V, 50 Hz, as well as two electric output terminals, which supply an output voltage V1. The output voltage V1 can comprise a time sequence of voltage pulses (pulse train) and be characterized by a predetermined main frequency (fundamental harmonic), hereinafter referred to as frequency f1. Obviously, if the power supply network 50 is a three-phase network, the inverter device 9 can conveniently comprise three input terminals.

In the example shown herein, the inverter device 9 further comprises a terminal 9a associated with a parameter V1r for the control of the output voltage V1, a terminal 9b associated with a parameter f1r for the control of the frequency f1, and a terminal 9c associated with a parameter Kr for the control of the ratio K between the output voltage V1 and the frequency f1.

According to a preferred embodiment shown in figure 1, the parameter V1r for the control of the output voltage V1 and the parameter f1r for the control of the frequency f1 can be set by an operator, during an initial set up phase, through a user interface device 30 connected to the terminals 9a and 9b and provided with control means, for example a keyboard or similar apparatuses.

As far as the parameter Kr is concerned, in the example shown herein, it is adjusted by means of a control signal S1 provided by the controller circuit 13, in the way that will be described more in detail below.

The inverter device 9 is a known apparatus and, therefore, it will not be further described, except for the fact that it can operate so as to generate a voltage V1 that is lower than or equal to the voltage Vo, whereas the frequency f1 can be set within a predetermined band or interval of frequencies $\Delta f1$. For example, the interval $\Delta f1$ could preferably - though not necessarily - range from approximately 30 to approximately 200 Hz. Furthermore, the inverter device 9 can be configured so as to adjust/change the output voltage V1 depending on a corresponding adjustment of the ratio K, though keeping the frequency f1 at a value equal to the predetermined/set frequency f1r. According to the embodiment shown in Figure 1, the frequency f1 of the voltage V1 is kept fixed (at the predetermined value), whereas an increase or a reduction of the ratio Kr causes a corresponding increase or reduction, respectively, of the output voltage V1.

As far as the filter 10 is concerned, if it is present, it electrically connects the two electric output terminals of the inverter device 9 to the two electric input terminals of the primary circuit of the transformer 11, and it is designed to filter the voltage V1 so as to eliminate therefrom the secondary frequencies (or harmonic components) generated by the inverter device 9, having a frequency other than the fundamental frequency f1r, thus generating a filtered voltage V1f. The filter 10 can conveniently have a passband corresponding to the band $\Delta f1$.

As far as the transformer 11 is concerned, it has the two terminal of the primary circuit connected to the corresponding output terminals of the filter 11 so as to receive the filtered voltage V1f, whereas the secondary circuit has the two output terminals connected to the respective two terminals 5 (anode/cathode) of the ionization tube 2, one of them being able to be connected to a reference potential, preferably a ground potential. In particular, the transformer 11 has a predetermined transformation ratio N=V1f/V2, and is structured so as to the receive the voltage V1f and raise it to a "high" voltage V2, which turns out to be much greater than the voltage V1f, V2>>V1f. The high voltage V2 could range, for example, from approximately 1500 to 4000 Volt.

As far as the measuring device 12 is concerned, according to a preferred embodiment, it is configured to measure the actual (real) voltage, hereinafter referred to as V2m, present between the two terminals of the secondary circuit of the transformer 11.

The Applicant found out that the direct measurement of the actual voltage V2m supplied by the secondary circuit of the transformer 11 can hardly be carried out by means of known measuring tools/devices, as it is particularly high and much greater than the nominal voltage that can be measured by these measuring tools/devices (whose maximum measurable value typically is lower than or equal to 1000 V) .

For this purpose, in the embodiment shown in Figure 1, the measuring device 12 is designed to carry out an indirect measurement of the actual voltage V2m by using a resistive divider comprising a plurality NA of resistors 15, which are connected to one another in series between the two terminals of the secondary circuit of the transformer 11 and have respective resistances RA. Hence, the total resistance of the divider can be RT=NA*RA; evidently, the voltage at the ends of a resistance has a measurable reduced value equal to VNA=V2/NA.

The measuring device 12 further comprises an electronic, voltage measuring module 16, for example a digital voltmeter or any other type of similar electric/electronic measuring tool, which is preferably connected to the two terminals of a resistor 15 so as to measure the voltage VNA, and is designed to determine the actual voltage V2m based on the measured voltage VNA (V2m=VNA*NA), so that it can provide a measuring signal containing a value indicating the actual voltage V2m calculated.

Obviously, the total resistance R of the NA resistors 15 can be conveniently sized so as to have a very high value. The Applicant found out that it is convenient to size the total resistance R based on the following equation:

$$R>Rmin=Vmax^2*100/(Ptr*NA)$$

wherein

Vmax is the maximum supply voltage of the ionization tube 2;
Ptr is the nominal power of the transformer 9;
Rmin is the value of the resistance of a resistor 15 sized in such a way that, in use, the current flowing through the NA resistors 15 does not exceed 1/100 of the current supplied to the ionization tube 2. In other words, the resistance Rmin of a resistor 15 is sized in such a way that, in use, the current flowing through the resistors 15 is substantially negligible compared to the current generated by the secondary circuit of the transformer 11, which is going to be supplied to the ionization tube 2.

According to a different embodiment (which is not shown herein), the measuring device 12 could carry out the indirect measurement of the actual voltage V2m by means of a voltmeter measuring transformer, which is configured to operate in the passband ∆f1 and is designed to cooperate with a voltmeter, which is sized, in turn, to measure a reduced voltage, supplied by the output of the voltmeter transformer, and is configured to process the reduced voltage itself in order to the provide an indication of the measure of the actual voltage V2m.

With reference to Figure 1, the controller circuit 13 is configured to: receive a first value, which indicates a target voltage V2t to be supplied by the secondary circuit of the transformer 11 to the ionization tube 2 to ensure the requested ionization, receive a second value, which indicates the actual/real voltage V2m measured by the electronic measuring device 12 in the secondary circuit of the transformer 11 supplying the ionization tube 2, calculate the target voltage V2t based on the first value received and the actual voltage V2m based on the second value received, compare the actual voltage V2m with the target voltage V2t, adjust, by means of the control signal S1, the ratio Kr=V1/f1 (wherein f1=f1r) between the output voltage V1 and the frequency f1r of the inverter device 9 depending on the result of the comparison.

Hence, according to a preferred embodiment shown in Figure 1, the electronic control device 13 carries out a closed loop feedback control, in which the adjustment of the ratio Kr=V1/f1 in the terminal 9c of the inverter device 9 is carried out through a predetermined transfer function configured to substantially reduce to zero the difference/deviation between the target voltage V2t and the actual voltage V2m.

According to a preferred embodiment shown in Figure 1, the controller circuit 13 comprises a subtracter module 18, which is configured to: receive the value of the target voltage V2t in a first input, receive the value of the actual voltage V2m in a second input, determine a deviation/error E according to the difference between the target voltage V2t and the actual voltage V2m, and supply the determined error E in an output.

According to a preferred embodiment shown in Figure 1, the controller circuit 13 further comprises a PID module 17, which is configured to implement a proportional-integral-derivative transfer function on the error E to calculate the ratio Kr to be supplied to the invert device 9 so as to reduce to zero the error E. Therefore, the PID module 17, in use, receives the error E as an input, process it by means of the proportional-integral-derivative transfer function, so as to calculate the ratio Kr, and supplies the input 9c of the inverter device 9 with the control signal S1 containing the value indicating the calculated ratio Kr.

The PID module 17 can be provided with three circuit stages (nor shown); one of them carries out a proportional function, a stage implements an integrative function, whereas a further stage carries out a derivative function of the error E to provide the ratio Kr.

As far as the target voltage V2t is concerned, according to the possible embodiment shown in Figure 1, it can be set by a user through the user control interface 30.

In the initial phase, the user sets, by means of the control interface 30, the predetermined frequency F1r, the initial voltage V1, and the target voltage V2t. Therefore, the inverter device 9 receives, at the terminals 9a and 9b, the initial voltage V1 and the frequency f1r to be kept, respectively.

Furthermore, the inverter device 9 receives from the controller circuit 13, at the terminal 9b, the control signal S1, which indicates a ratio Kr that, in the initial phase, has a predetermined initial value.

During the operation of the ionization apparatus 1, the controller circuit 13 carries out, instant by instant, the closed loop feedback control and adjusts/changes the ratio Kr of the inverter device 9 based on the deviation E between the target voltage V2t and the actual voltage V2m measured, so as to reduce to zero the deviation/error E.

Therefore, in case of a positive deviation E of the V2m relative to the target voltage V2t (V2m>V2t, E>0), the controller circuit 13 reduces, in a controlled manner, thanks to the intervention of the PID module 17, the ratio Kr, so as to bring V2m back to a value equal to V2t. Vice versa, in case of a negative deviation of the V2m relative to the target voltage V2t (V2m<V2t, E<0), the controller circuit 13 increases, in a controlled manner, the ratio Kr, so as to bring V2m back to a value equal to V2t.

The Applicant found out that, thanks to the feedback control of the actual voltage V2m described above, it is possible to conveniently compensate, in particular, the reductions of voltage in the secondary circuit of the transformer 11, which occur when the fundamental frequency f1 increases until it reaches a value exceeding the maximum frequency of the passband of the transformer 11.

To this aim, we would like to point out that, as it is known, the transformation ratio V2/V1 of the transformer 11 is determined through the following known equation:

$$\mathtt{V2(s)/V1(s)=(N2/N1)*(s*(L\mu/Rd))/((1+s*(L\mu/Rd))*(1+s*(L\mu/R'))}$$

wherein:

Rd, Ld and $L\mu$ represent, respectively, the resistance and the two inductances characteristic of the equivalent circuit of the transformer 11,
$R'=R(N1/N2)^2$ is a resistive parameter in which R is the resistance of the ionization tube 2, and
s is the frequency (according to the Laplace transform).

The equation indicated above evidently shows that the operating band of the transformer 11 is limited by a minimum frequency, which basically depends on the electric parameters Rd, Ld and $L\mu$ of the transformer, and a maximum frequency, which, on the other hand, depends on the resistance R of the ionization tube 2. As a consequence, an increase in the number of ionization tubes (connected, for example, in parallel) determines, on the one hand, a decrease of the resistance R and, on the other hand, a decrease of the passband of the voltage V2.

Therefore, if the frequency of the voltage V2 is set or established at a value exceeding the maximum frequency mentioned above, the actual voltage V2m supplied by the transformer 11 to the ionization tube 2 turns out to be lower than the target voltage V2t.

Hence, thanks to the closed loop control, the controller circuit 13 compensates the negative instabilities of the output voltage V2=V2m caused when the maximum frequency of the operating band of the transformer 11 is exceeded.

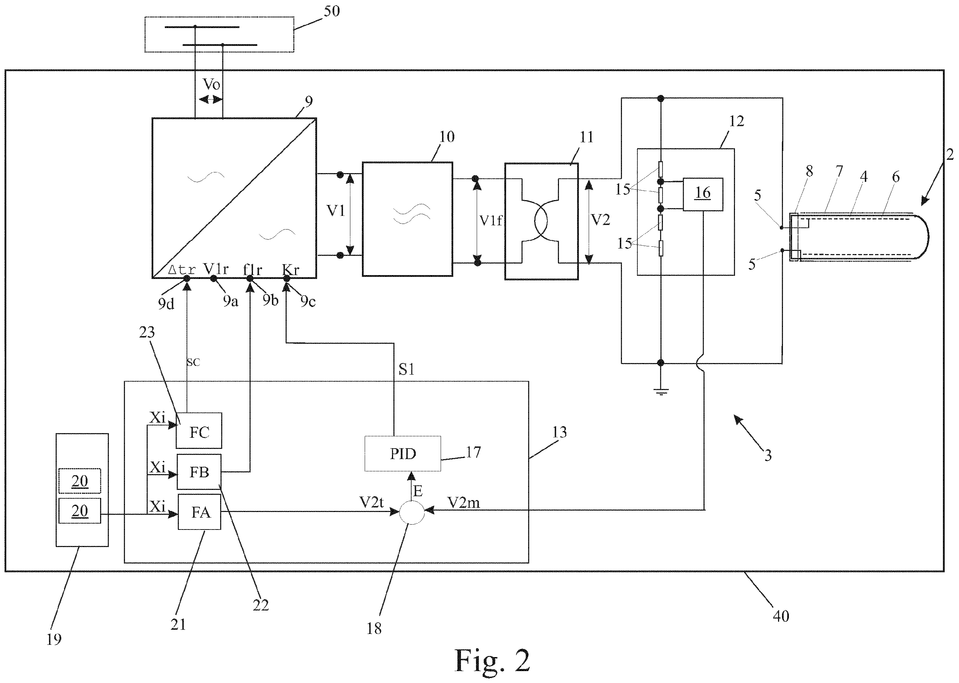

The embodiment shown in Figure 2, on the other hand, relates to a ionization apparatus 40, which is similar to the ionization apparatus 1 and whose component parts will be indicated, when possible, with same reference numbers indicating the corresponding parts of the ionization apparatus 1.

The ionization apparatus 40 differs from the ionization apparatus 1 in that, on the one hand, the electronic control system 3 also comprises an ionization effect detecting system 19 and, on the other hand, the target voltage V2t, used by the controller circuit 13 to control the output voltage V1 of the inverter device 9, is determined based on the detection carried out by the ionization effect detecting system 19.

With reference to figure 2, the ionization effect detecting system 19 could comprise, for example, one or more sensors 20 detecting elements/chemical substances relating to or indicating the level/degree of concentration of the polluting/contaminating particles present in a fluid.

For example, according to a possible embodiment (which is not shown herein), the sensors could be configured to detect a value that indicates the quantity/concentration $X_i$ of a chemical element corresponding, for example, to ammonia. This solution could be suited for applications in which the ionization apparatus 40 is used to eliminate moulds present in a room/space, such as for example a cold-storage room. In this case, the detection of ammonia enables the determination of the presence of moulds. In use, if after the activation of the ionization tube 2 there is not a corresponding reduction of the quantity/concentration $X_i$ of the monitored chemical element, the need is established to increase the ionization power of the ionization tube 2. The increase of the ionization power can be obtained by increasing the voltage V2 supplied to tube 2 and/or the frequency f1 or time interval $\Delta t$ for the activation/turning-on of the ionization tube 2.

Obviously, the ionization effect detecting system 19 is not limited to the sensors described above, but it could also comprise other types of sensors 20, such as, for example, sensors measuring carbon compounds comprising probes for the detection of volatile organic compounds (VOC probes) or any other similar sensor.

With reference to the embodiment shown in Figure 2, the inverter device 9 comprises a terminal 9d receiving a control signal SC containing an indication concerning an ON/OFF interval $\Delta tr$ of the inverter device 9, and the ionization effect detecting system 19 comprises at least one sensor 20 providing the first value indicating the quantity/concentration $X_i$ of the chemical element.

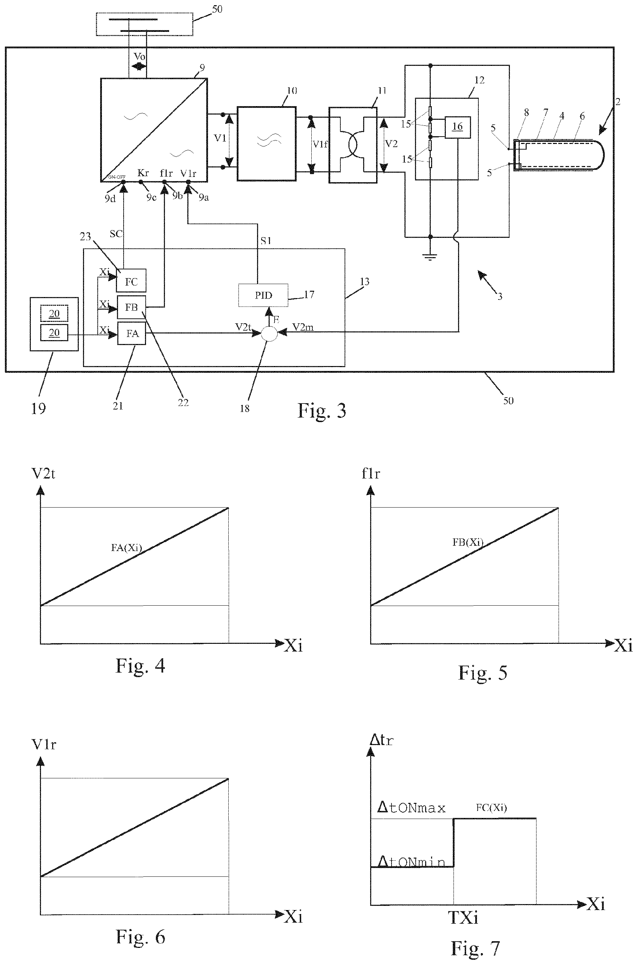

As far as the controller circuit 13 is concerned, it comprises a functional module 21, which is configured so as to receive, as an input, the quantity/concentration $X_i$ and processes the quantity/concentration $X_i$ through a predetermined function FA in order to provide, as an output, the target voltage V2t. The function FA can comprise a proportional transfer function configured so as to increase/reduce the target voltage V2t in a proportional manner relative to an increase/reduction of the quantity/concentration $X_i$ detected. Figure 4 graphically shows, by mere way of a non-limiting example, a possible function FA($X_i$) having a linear, proportional development. Obviously, the function FA($X_i$) could also have a different development from the one described above, for example a predetermined non-linear development.

With reference to the embodiment shown in Figure 2, the controller circuit 13 can conveniently comprise a functional module 22, which is configured so as to receive, as an input, the quantity/concentration $X_i$ and processes the quantity/concentration $X_i$ through a predetermined function FB($X_i$) in order to provide, as an output, the adjusting parameter f1r of the fundamental frequency f1. The function FB($X_i$) can comprise a proportional transfer function configured so as to increase/reduce the frequency f1r in a proportional manner relative to an increase/reduction of the quantity/concentration $X_i$ detected. Figure 5 graphically shows, by mere way of a non-limiting example, a possible function FB($X_i$) having a linear, proportional development. Obviously, the function FB($X_i$) could also have a different development from the one described above, for example a predetermined non-linear development.

Hence, in the example shown, the controller circuit 13 supplies to the terminal 9b of the inverter device 9 the frequency f1r calculated by the second functional module 22, so that the inverter device 9 changes the frequency f1 of the voltage V1 based on the frequency f1r received in the terminal 9b.

With reference to the embodiment shown in Figure 2, the controller circuit 13 can conveniently comprise a functional module 23, which is configured so as to receive, as an input, the quantity/concentration $X_i$ and processes the quantity/concentration $X_i$ through a predetermined function FC($X_i$) in order to provide, as an output, the control signal SC containing an indication concerning the turning-on time interval $\Delta tr$ to be given to the inverter device 9. The function FC($X_i$) can comprise a step function configured so as to assign a minimum turning-on interval $\Delta tONmin$ when the quantity/concentration $X_i$ is smaller than or equal to a predetermined threshold $TX_i$, and a maximum turning-on interval $\Delta tONmax$ when the quantity/concentration $X_i$ is greater than the predetermined threshold $TX_i$. Figure 7 graphically shows, by mere way of a non-limiting example, a possible function FC($x_i$) having a step development.

In use, the target voltage V2t is changed by the functional module 23 based on the quantity/concentration $X_i$ detected by the sensor 20, and the ratio Kr is adjusted by the controller circuit 13 depending on the error E. Preferably, though not necessarily, the controller circuit 13 can be configured to also adjust, in addition to the ratio Kr, the frequency f1r calculated by the functional module 22 based on the quantity/concentration $X_i$, and/or the turning-on time interval $\Delta t$ of the inverter device calculated by means of the functional module 23.

Obviously, according to a different embodiment (which is not shown herein), the ionization effect detecting system 19 can comprise a plurality of sensors 20 providing the first values $X_i$, and the controller circuit 13 can comprise, for each value $X_i$ received, a group of respective functional modules 21, 22 and 23. For example, in case the ionization effect detecting system 19 comprises NS sensors 20 providing NS first values $X_i$, the controller circuit 13 can comprise NS groups of functional modules 21, 22 and 23 providing, as an output, the calculated target voltages V2t(i), the calculated frequencies f1r(i), and a number NS of calculated turning-on time intervals $\Delta tr(i)$ (with i ranging from 1 to NS). The controller circuit 13 can also be advantageously configured to compare the calculated voltages V2t(i) with one another so as to determine a maximum target voltage V2tMAX, compare the calculated frequencies f1r(i) with one another so as to determine the maximum frequency f1rMAX, and compare the turning-on time intervals $\Delta tr(i)$ so as to determine a maximum turning-on time interval $\Delta trmax$, thus supplying the maximum target voltage V2tMAX to the subtracter module 18, and the maximum frequency f1rMAX as well as the maximum turning-on time interval Δtrmax to the inverter device 9.

The embodiment shown in Figure 3, on the other hand, relates to a ionization apparatus 50, which is similar to the ionization apparatus 40 and whose component parts will be indicated, when possible, with same reference numbers indicating the corresponding parts of the ionization apparatus 1.

In particular, the ionization apparatus 50 differs from the apparatus 40 in that the controller circuit 13, instead of adjusting the ratio Kr and the frequency fr, adjusts the voltage V1r through the PID module 17 and the frequency fr1 through the module 22.

The ionization apparatus is particularly advantageous because, on the one hand, it can easily be adapted to ionization tubes without having to replace the transformer and, on the other hand, it allows the frequency of the high voltage to be changed, though keeping the voltage itself stable at a predetermined or even variable value.

Finally, it is clear that the ionization apparatus and the operating method described above can be subjected to changes and variations, without for this reason going beyond the scope of protection of the invention as set forth in the appended claims.

**Claims**

1. An ionization apparatus (1) configured to ionize a fluid to remove polluting/contaminating particulates present in the fluid itself, comprising:

   at least one ionization tube (2) designed to generate a corona discharge in said fluid when it is supplied with a high alternating supply voltage (V2), and
   an electronic control system (3), which is electrically connected to said ionization tube (2) to supply said high alternating supply voltage (V2) thereto,
   said ionization apparatus (1) being **characterized in that** said electronic control system (3) comprises:

   an inverter device (9), which is configured to supply a medium alternating voltage (V1) having an operating frequency (f1); said inverter device (9) being further configured to receive an input parameter (Kr, V1r) and being designated to vary said medium alternating voltage (V1) according to the input parameter (Kr, V1r) received;
   a transformer (11) which has a primary circuit connected to said inverter device (9) for receiving said medium voltage (V1) and a secondary circuit connected to said ionization tube (2) for supplying said high voltage (V2) thereto;
   a measuring device (12) configured to determine an actual high voltage (V2m) supplied to said ionization tube (2) by said secondary circuit;
   a controller circuit (13) configured to: receive an input target voltage (V2t), receive said actual high voltage (V2m), compare said input target voltage (V2t) with said actual high voltage (V2m), determine said input parameter (Kr, V1r) for controlling said medium alternating voltage (V1) based on said comparison, and supply said determined input parameter (Kr, V1r) to the inverter device (9).

2. An ionization apparatus according to claim 1, wherein said controller circuit (13) is configured to change said input parameter (Kr, V1r) in order to cause said actual high voltage (V2m) and said target high voltage (V2t) to satisfy a predetermined relation between them.

3. An ionization apparatus according to claim 1, wherein said controller circuit (13) is configured to change said input parameter (Kr, V1r) by performing a closed loop feedback control of said actual high voltage (V2m) based on said target high voltage (V2t).

4. An ionization apparatus according to any one of the preceding claims, wherein said controller circuit (13) comprises:

   a subtracter module (18), which is configured to: receive the value of the target high voltage (V2t) in a first input, receive the value of said actual high voltage (V2m) in a second input, determine a deviation/error (E) according to the difference between the target high voltage (V2t) and the actual high voltage (V2m), and supply the determined error (E) in an output;
   a derivative integral proportional module (17) configured to receive the input error (E), determine said input parameter (Kr, V1r) according to said error (E), and supply said input parameter (Kr, V1r) to said inverter device (9).

5. An ionization apparatus according to claim 1, wherein said input parameter (Kr) is a parameter for controlling the ratio (K) of the medium alternating voltage (V1) supplied by the inverter device (9) with the corresponding frequency (f1).

6. An ionization apparatus according to claim 1, wherein said input parameter (V1r) is a parameter for controlling the medium alternating voltage (V1).

7. An ionization apparatus according to any one of the preceding claims, wherein said electronic control system (3) comprises:

> a ionization effect detecting system (19) which is configured to supply a value which is indicative of the ionization level/degree (Xi) obtained by means of said ionization tube (2), and wherein
> said controller circuit (13) is also configured to:
>
> > receive said value which is indicative of the ionization level/degree (Xi), and
> > change said target high voltage (V2t) as a function of said ionization level/degree (Xi).

8. An ionization apparatus according to claim 1, wherein said inverter device (9) is configured to keep said operating frequency (f1) of the medium alternating voltage (V1) at a predetermined value (f1r).

9. An ionization apparatus according to claims 1 and 7, wherein said controller circuit (13) is configured to control said operating frequency (f1) of the medium alternating voltage (V1) according to said ionization level/degree (Xi).

10. A method for operating an ionization apparatus (1) configured to ionize a fluid to remove polluting/contaminating particulates present in the fluid itself, comprising:

> at least one ionization tube (2) designed to generate a corona discharge in said fluid when it is supplied with a high alternating supply voltage (V2), and
> an electronic control system (3), which is electrically connected to said ionization tube (2) to supply said high alternating supply voltage (V2) thereto, said method being **characterized by**:
>
> > - supplying, by means of an inverter device (9), a medium alternating voltage (V1) having an operating frequency (f1);
> > - receiving an input parameter (Kr, V1r) by means of said inverter device (9),
> > - varying, by means of said inverter device (9), said medium alternating voltage (V1) according to the input parameter (Kr, V1r) received,
>
> receiving said medium alternating voltage (V1) from said inverter device (9), by means of the primary circuit of a transformer (11),
> supplying said high alternating supply voltage (V2) to said ionization tube (2) by means of the secondary circuit of the transformer (11);
> determining, by means of a measuring device (12), an actual high voltage (V2m) supplied to said ionization tube (2) by said secondary circuit;
> receiving an input target voltage (V2t) by means of a controller circuit (13),
> receiving said actual high voltage (V2m) by means of said controller circuit (13),
> comparing said input target voltage (V2t) with said actual high voltage (V2m), by means of said controller circuit (13),
> determining, by means of said controller circuit (13), said input parameter (Kr, V1r) for controlling said medium alternating voltage (V1) according to said comparison, and
> supplying said input parameter (Kr, V1r) determined by the inverter device (9), by means of said controller circuit (13).

## Patentansprüche

1. Eine Ionisierungsvorrichtung (1), die dazu eingerichtet ist, ein Fluid zu ionisieren, um verunreinigende/kontaminierende Partikel, die in dem Fluid vorhanden sind, zu entfernen, aufweisend:

mindestens eine Ionisierungsröhre (2), die dazu eingerichtet ist, eine Koronaentladung in dem Fluid zu erzeugen, wenn sie mit einer Hochwechselversorgungsspannung (V2) versorgt wird, und

ein elektronisches Steuersystem (3), das mit der Ionisierungsröhre (2) elektrisch verbunden ist, um diese mit der Hochwechselversorgungsspannung (V2) zu versorgen,

wobei die Ionisierungsvorrichtung (1) **dadurch gekennzeichnet ist, dass** das elektronische Steuersystem (3) aufweist:

eine Inverter-Vorrichtung (9), die dazu eingerichtet ist, eine Mittelwechselspannung (V1), die eine Betriebsfrequenz (f1) hat, bereitzustellen; wobei die Inverter-Vorrichtung (9) ferner dazu eingerichtet ist, einen Eingabeparameter (Kr, V1r) zu empfangen, und dazu bestimmt ist, die Mittelwechselspannung (V1) gemäß dem empfangenen Eingabeparameter (Kr, V1r) zu variieren;

einen Transformator (11), der einen primären Schaltkreis, der mit der Inverter-Vorrichtung (9) verbunden ist, um die Mittelspannung (V1) zu empfangen, und einen sekundären Schaltkreis, der mit der Ionisierungsröhre (2) verbunden ist, um diese mit der Hochspannung (V2) zu versorgen, aufweist;

eine Messvorrichtung (12), die dazu eingerichtet ist, eine von dem sekundären Schaltkreis an die Ionisierungsröhre bereitgestellte tatsächliche Hochspannung (V2m) zu bestimmen;

eine Steuerschaltung (13), die dazu eingerichtet ist, um: eine Eingabe-Zielspannung (V2t) zu empfangen, die tatsächliche Hochspannung (V2m) zu empfangen, die Eingabe-Zielspannung (V2t) mit der tatsächlichen Hochspannung (V2m) zu vergleichen, den Eingabeparameter (Kr, V1r) zur Steuerung der Mittelwechselspannung (V1) auf Basis des Vergleichs zu bestimmen und den bestimmten Eingabeparameter (Kr, V1r) an die Inverter-Vorrichtung (9) zuzuführen.

2. Die Ionisierungsvorrichtung nach Anspruch 1, wobei die Steuerschaltung (13) dazu eingerichtet ist, den Eingabeparameter (Kr, V1r) zu ändern, um zu bewirken, dass die tatsächliche Hochspannung (V2m) und die Ziel-Hochspannung (V2t) eine vorbestimmte Beziehung zueinander erfüllen.

3. Die Ionisierungsvorrichtung nach Anspruch 1, wobei die Steuerschaltung (13) dazu eingerichtet ist, den Eingabeparameter (Kr, V1r) durch Durchführen einer geschlossenen Rückkopplungregelung der tatsächlichen Hochspannung (V2m) auf Basis der Ziel-Hochspannung (V2t) zu ändern.

4. Die Ionisierungsvorrichtung nach einem der vorhergehenden Ansprüche, wobei die Steuerschaltung (13) aufweist:

ein Subtrahierermodul (18), das dazu eingerichtet ist, um: den Wert der Ziel-Hochspannung (V2t) in einem ersten Eingang zu empfangen, den Wert der tatsächlichen Hochspannung (V2m) in einem zweiten Eingang zu empfangen, eine Abweichung/einen Fehler (E) gemäß der Differenz zwischen der Ziel-Hochspannung (V2t) und der tatsächlichen Hochspannung (V2m) zu bestimmen und den bestimmten Fehler (E) in einem Ausgang bereitzustellen;

ein Ableitungsintegralproportionalmodul (17), das dazu eingerichtet ist, den Eingabefehler (E) zu empfangen, den Eingabeparameter (Kr, V1r) gemäß dem Fehler (E) zu bestimmen und den Eingabeparameter (Kr, V1r) an die Inverter-Vorrichtung (9) zuzuführen.

5. Die Ionisierungsvorrichtung nach Anspruch 1, wobei der Eingabeparameter (Kr) ein Parameter zur Steuerung des Verhältnisses (K) der von der Inverter-Vorrichtung (9) bereitgestellten Mittelwechselspannung (V1) mit der entsprechenden Frequenz (f1) ist.

6. Die Ionisierungsvorrichtung nach Anspruch 1, wobei der Eingabeparameter (V1r) ein Parameter zur Steuerung der Mittelwechselspannung (V1) ist.

7. Die Ionisierungsvorrichtung nach einem der vorhergehenden Ansprüche, wobei das elektronische Steuersystem (3) aufweist:

ein Ionisierungseffekt-Detektionssystem (19), das dazu eingerichtet ist, einen Wert, der einen mittels der Ionisierungsröhre (2) erzielten Ionisierungspegel/-grad (Xi) angibt, bereitzustellen, und wobei die Steuerschaltung (13) außerdem dazu eingerichtet ist, um:

den Wert, der den Ionisierungspegel/-grad (Xi) angibt, zu empfangen, und die Ziel-Hochspannung (V2t) als eine Funktion des Ionisierungspegels/-grads (Xi) zu ändern.

8. Die Ionisierungsvorrichtung nach Anspruch 1, wobei die Inverter-Vorrichtung (9) dazu eingerichtet ist, die Betriebsfrequenz (f1) der Mittelwechselspannung (V1) bei einem vorgegebenen Wert (f1r) zu halten.

9. Die Ionisierungsvorrichtung nach Anspruch 1 und 7, wobei die Steuerschaltung (13) dazu eingerichtet ist, die Betriebsfrequenz (f1) der Mittelwechselspannung (V1) gemäß dem Ionisierungspegel/-grad (Xi) zu steuern.

10. Ein Verfahren zum Betreiben einer Ionisierungsvorrichtung (1), die dazu eingerichtet ist, ein Fluid zu ionisieren, um verunreinigende/kontaminierende Partikel, die in dem Fluid vorhanden sind, zu entfernen, aufweisend:

mindestens eine Ionisierungsröhre (2), die dazu eingerichtet ist, eine Koronaentladung in dem Fluid zu erzeugen, wenn sie mit einer Hochwechselversorgungsspannung (V2) versorgt wird, und
ein elektronisches Steuersystem (3), das mit der Ionisierungsröhre (2) elektrisch verbunden ist, um diese mit der Hochwechselversorgungsspannung (V2) zu versorgen,
wobei das Verfahren **gekennzeichnet ist durch**

- Bereitstellen einer Mittelwechselspannung (V1), die eine Betriebsfrequenz (f1) hat, mittels einer Inverter-Vorrichtung (9);
- Empfangen eines Eingabeparameters (Kr, V1r) mittels der Inverter-Vorrichtung (9),
- Variieren der Mittelwechselspannung (V1) gemäß dem empfangenen Eingabeparameter (Kr, V1r) mittels der Inverter-Vorrichtung,

Empfangen der Mittelwechselspannung (V1) aus der Inverter-Vorrichtung (9) mittels des primären Schaltkreises eines Transformators (11),
Bereitstellen der Hochwechselversorgungsspannung (V2) an die Ionisierungsröhre (2) mittels des sekundären Schaltkreises des Transformators (11);
Bestimmen einer von dem sekundären Schaltkreis an die Ionisierungsröhre bereitgestellten tatsächlichen Hochspannung (V2m) mittels einer Messvorrichtung (12);
Empfangen einer Eingabe-Zielspannung (V2t) mittels einer Steuerschaltung (13),
Empfangen der tatsächlichen Hochspannung (V2m) mittels der Steuerschaltung (13),
Vergleichen der Eingabe-Zielspannung (V2t) mit der tatsächlichen Hochspannung (V2m) mittels der Steuerschaltung (13),
Bestimmen des Eingabeparameters (Kr, V1r) mittels der Steuerschaltung (13), um die Mittelwechselspannung (V1) gemäß dem Vergleich zu steuern, und
Bereitstellen des von der Inverter-Vorrichtung (9) bestimmten Eingabeparameters (Kr, V1r) mittels der Steuerschaltung (13).

## Revendications

1. Appareil d'ionisation (1) configuré pour ioniser un fluide afin d'enlever les particules polluantes/contaminantes qui sont présentes dans le fluide lui-même, comprenant :

au moins un tube d'ionisation (2) qui est conçu pour générer une décharge Corona dans ledit fluide lorsqu'il est alimenté selon une tension d'alimentation alternative élevée (V2) ; et
un système de commande électronique (3) qui est connecté électriquement audit tube d'ionisation (2) pour alimenter ladite tension d'alimentation alternative élevée (V2) dessus ;
ledit appareil d'ionisation (1) étant **caractérisé en ce que** ledit système de commande électronique (3) comprend :

un dispositif d'inverseur (9) qui est configuré pour alimenter une tension alternative intermédiaire (V1) qui présente une fréquence de fonctionnement (f1) ; ledit dispositif d'inverseur (9) étant en outre configuré pour recevoir un paramètre d'entrée (Kr, V1r) et étant conçu pour faire varier ladite tension alternative intermédiaire (V1) en fonction du paramètre d'entrée (Kr, V1r) reçu ;
un transformateur (11) qui comporte un circuit de primaire qui est connecté audit dispositif d'inverseur (9) pour recevoir ladite tension intermédiaire (V1) et un circuit de secondaire qui est connecté audit tube d'ionisation (2) pour alimenter ladite tension élevée (V2) dessus ;
un dispositif de mesure (12) qui est configuré pour déterminer une tension élevée réelle (V2m) qui est alimentée sur ledit tube d'ionisation (2) par ledit circuit de secondaire ;

un circuit de contrôleur (13) qui est configuré pour : recevoir une tension cible d'entrée (V2t), recevoir ladite tension élevée réelle (V2m), comparer ladite tension cible d'entrée (V2t) avec ladite tension élevée réelle (V2m), déterminer ledit paramètre d'entrée (Kr, V1r) pour commander ladite tension alternative intermédiaire (V1) sur la base de ladite comparaison et alimenter ledit paramètre d'entrée déterminé (Kr, V1r) sur le dispositif d'inverseur (9).

2. Appareil d'ionisation selon la revendication 1, dans lequel ledit circuit de contrôleur (13) est configuré pour modifier ledit paramètre d'entrée (Kr, V1r) afin de faire en sorte que ladite tension élevée réelle (V2m) et ladite tension élevée cible (V2t) satisfassent une relation prédéterminée entre elles.

3. Appareil d'ionisation selon la revendication 1, dans lequel ledit circuit de contrôleur (13) est configuré pour modifier ledit paramètre d'entrée (Kr, V1r) en réalisant une commande de rétroaction en boucle fermée de ladite tension élevée réelle (V2m) sur la base de ladite tension élevée cible (V2t).

4. Appareil d'ionisation selon l'une quelconque des revendications précédentes, dans lequel ledit circuit de contrôleur (13) comprend :

un module de soustracteur (18) qui est configuré pour : recevoir la valeur de la tension élevée cible (V2t) sur une première entrée, recevoir la valeur de ladite tension élevée réelle (V2m) sur une seconde entrée, déterminer une déviation/erreur (E) en fonction de la différence entre la tension élevée cible (V2t) et la tension élevée réelle (V2m) et alimenter l'erreur déterminée (E) sur une sortie ;
un module de dérivation, d'intégration et de proportionnalité (17) qui est configuré pour recevoir l'erreur d'entrée (E), pour déterminer ledit paramètre d'entrée (Kr, V1r) en fonction de ladite erreur (E) et pour alimenter ledit paramètre d'entrée (Kr, V1r) sur ledit dispositif d'inverseur (9).

5. Appareil d'ionisation selon la revendication 1, dans lequel ledit paramètre d'entrée (Kr) est un paramètre pour commander le rapport (K) de la tension alternative intermédiaire (V1) qui est alimentée par le dispositif d'inverseur (9) avec la fréquence correspondante (f1).

6. Appareil d'ionisation selon la revendication 1, dans lequel ledit paramètre d'entrée (V1r) est un paramètre pour commander la tension alternative intermédiaire (V1).

7. Appareil d'ionisation selon l'une quelconque des revendications précédentes, dans lequel ledit système de commande électronique (3) comprend :

un système de détection d'effet d'ionisation (19) qui est configuré pour alimenter une valeur qui est indicative du niveau/degré d'ionisation (Xi) qui est obtenu au moyen dudit tube d'ionisation (2) ; et dans lequel ledit circuit de contrôleur (13) est également configuré pour :

recevoir ladite valeur qui est indicative du niveau/degré d'ionisation (Xi) ; et modifier ladite tension élevée cible (V2t) en fonction dudit niveau/degré d'ionisation (Xi).

8. Appareil d'ionisation selon la revendication 1, dans lequel ledit dispositif d'inverseur (9) est configuré pour maintenir ladite fréquence de fonctionnement (f1) de la tension alternative intermédiaire (V1) à une valeur prédéterminée (f1r).

9. Appareil d'ionisation selon les revendications 1 et 7, dans lequel ledit circuit de contrôleur (13) est configuré pour commander ladite fréquence de fonctionnement (f1) de la tension alternative intermédiaire (V1) en fonction dudit niveau/degré d'ionisation (Xi).

10. Procédé pour faire fonctionner un appareil d'ionisation (1) qui est configuré pour ioniser un fluide afin d'enlever les particules polluantes/contaminantes qui sont présentes dans le fluide lui-même, comprenant :

au moins un tube d'ionisation (2) qui est conçu pour générer une décharge Corona dans ledit fluide lorsqu'il est alimenté selon une tension d'alimentation alternative élevée (V2) ; et
un système de commande électronique (3) qui est connecté électriquement audit tube d'ionisation (2) pour alimenter ladite tension d'alimentation alternative élevée (V2) dessus ;
ledit procédé étant **caractérisé par** :

- l'alimentation, au moyen d'un dispositif d'inverseur (9), d'une tension alternative intermédiaire (V1) qui présente une fréquence de fonctionnement (f1) ;
- la réception d'un paramètre d'entrée (Kr, V1r) au moyen dudit dispositif d'inverseur (9) ;
- la variation, au moyen dudit dispositif d'inverseur (9), de ladite tension alternative intermédiaire (V1) en fonction du paramètre d'entrée (Kr, V1r) reçu ;
- la réception de ladite tension alternative intermédiaire (V1) en provenance dudit dispositif d'inverseur (9), au moyen du circuit de primaire d'un transformateur (11) ;
- l'alimentation de ladite tension d'alimentation alternative élevée (V2) sur ledit tube d'ionisation (2) au moyen du circuit de secondaire du transformateur (11) ;
- la détermination, au moyen d'un dispositif de mesure (12), d'une tension élevée réelle (V2m) qui est alimentée sur ledit tube d'ionisation (2) par ledit circuit de secondaire ;
- la réception d'une tension cible d'entrée (V2t) au moyen d'un circuit de contrôleur (13) ;
- la réception de ladite tension élevée réelle (V2m) au moyen dudit circuit de contrôleur (13) ;
- la comparaison de ladite tension cible d'entrée (V2t) avec ladite tension élevée réelle (V2m) au moyen dudit circuit de contrôleur (13) ;
- la détermination, au moyen dudit circuit de contrôleur (13), dudit paramètre d'entrée (Kr, V1r) pour commander ladite tension alternative intermédiaire (V1) en fonction de ladite comparaison ; et
- l'alimentation dudit paramètre d'entrée (Kr, V1r) qui est déterminé par le dispositif d'inverseur (9), au moyen dudit circuit de contrôleur (13).

Fig. 1

EP 3 093 073 B1

Fig. 2

Fig. 3

Fig. 4

Fig. 5

Fig. 6

Fig. 7

**EP 3 093 073 B1**

**REFERENCES CITED IN THE DESCRIPTION**

**Patent documents cited in the description**

- CH 666372
- US 8747754 B
- WO 2006130997 A1
- US 8747754 A